# EUROPEAN PATENT APPLICATION

(11) **EP 4 311 340 A1**
(43) Date of publication of application: **24.01.2024**
(21) Application number: 22784098.0
(22) Date of filing: 07.04.2022
(51) Int. Cl.: H04W 72/04, H04W 76/10

(54) **INFORMATION SENDING AND RECEIVING METHOD AND COMMUNICATION APPARATUS**

(30) Priority: 09.04.2021 CN 202110383076; 04.06.2021 CN 202110626765
(71) Applicant: Huawei Technologies Co., Ltd., Shenzhen, Guangdong 518129 (CN)
(72) Inventor: WANG, Feng, Shenzhen, Guangdong 518129 (CN); GUO, Zhiheng, Shenzhen, Guangdong 518129 (CN); ZHANG, Xu, Shenzhen, Guangdong 518129 (CN); QU, Bingyu, Shenzhen, Guangdong 518129 (CN)
(74) Representative: Pfenning, Meinig & Partner mbB
(86) International application number: PCT/CN2022/085579
(87) International publication number: WO 2022/214032

(57) **Abstract**

This application provides an information sending method, an information receiving method, and a communication apparatus. The method includes: A terminal device determines first information, where the first information includes a first information element and a second information element, the first information element indicates at least two frequency band sets, a first frequency band set in the at least two frequency band sets includes at least one frequency band, the second information element indicates a first relationship between a second frequency band set and the first frequency band set in the at least two frequency band sets, and the first relationship includes switching and/or concurrency. The terminal device sends the first information to a network device. According to the method, in this application, the network device can better schedule the terminal device when configuring at least two carrier sets for the terminal device.

## Description

This application claims priorities to Chinese Patent Application No. 202110383076.7, filed with the China National Intellectual Property Administration on April 9, 2021 and entitled "INFORMATION SENDING METHOD, INFORMATION RECEIVING METHOD, AND COMMUNICATION APPARATUS", and to Chinese Patent Application No. 202110626765.6, filed with the China National Intellectual Property Administration on June 4, 2021 and entitled "INFORMATION SENDING METHOD, INFORMATION RECEIVING METHOD, AND COMMUNICATION APPARATUS", both of which are incorporated herein by reference in their entireties.

### TECHNICAL FIELD

This application relates to the communication field, and more specifically, to an information sending method, an information receiving method, and a communication apparatus.

### BACKGROUND

A growing quantity of users of intelligent terminals, and increasing user traffic volume and data throughput pose a higher requirement on a communication rate. A larger transmission bandwidth is required to meet requirements for higher downlink and uplink peak rates. Due to a scarcity of a large bandwidth with continuous spectrum, a carrier aggregation (carrier aggregation, CA) solution is proposed in a 4G long term evolution (long term evolution, LTE) system.

The work plan 16 (release 16, R16) proposes a new uplink mode. To be specific, if a terminal device supports two uplink carriers, the terminal device can switch a radio frequency chain on the two carriers. This improves utilization of the radio frequency chain.

In the work plan 15 (release 15, R15), a terminal device needs to report, to a network device, a frequency band combination list (list) supported by the terminal device. However, for a terminal device that supports dynamic radio frequency chain switching, a new frequency band combination list (list) is designed in the R16. In other words, the terminal device needs to report, in the new frequency band combination list (list), frequency band information related to supported dynamic radio frequency chain switching.

However, the protocol does not limit a quantity of carrier sets configured by a network device for the terminal device. However, when the network device configures a plurality of carrier sets for the terminal device, how to enable the network device to better schedule the terminal device is an urgent problem to be resolved.

### SUMMARY

This application provides an information sending method and a communication apparatus, to enable a network device to better schedule a terminal device when the network device configures at least two carrier sets for the terminal device.

According to a first aspect, an information sending method is provided, including: A terminal device determines first information. The first information includes a first information element and a second information element. The first information element indicates at least two frequency band sets. A first frequency band set in the at least two frequency band sets includes at least one frequency band. The second information element indicates a first relationship between a second frequency band set and the first frequency band set in the at least two frequency band sets. The first relationship includes switching and/or concurrence. The terminal device sends the first information to a network device.

According to the foregoing technical solution, in this application, the network device is enabled to learn of a mode supported by the terminal device when the terminal device performs uplink Tx switching on at least one of the carrier sets, so that the network device can normally schedule the terminal device when configuring the at least one carrier set for the terminal device.

With reference to the first aspect, in some implementations of the first aspect, all frequency bands in the at least one frequency band set belong to a first frequency band combination, the first information further includes a third information element, and the third information element indicates a quantity of radio frequency chains supported by the first frequency band combination.

According to the foregoing technical solution, in this application, the network device is enabled to learn of a quantity of radio frequency chains that can be switched when the terminal device performs uplink Tx switching on the at least one carrier set, so that the network device can more flexibly schedule the terminal device on the at least one carrier set.

With reference to the first aspect, in some implementations of the first aspect, the first information includes a fourth information element, and the fourth information element indicates a quantity of radio frequency chains supported by the first frequency band set.

According to the foregoing technical solution, in this application, when quantities, reported by the terminal device, of radio frequency chains supported by at least one frequency band set are different, the network device can learn of a quantity of radio frequency chains supported by each frequency band set, so that the network device can more flexibly schedule the terminal device on the at least one carrier set.

With reference to the first aspect, in some implementations of the first aspect, a third frequency band set in the at least one frequency band set includes a fifth information element, the fifth information element indicates a second relationship between frequency bands in the third frequency band set, and the second relationship includes switching and/or concurrence.

It should be noted that, if a fifth information element corresponding to a frequency band set is reported in the frequency band set, a relationship between frequency bands in the frequency band set complies with an indication of the fifth information element; or
if a frequency band set does not include a fifth information element corresponding to the frequency band set, a relationship between frequency bands in the frequency band set complies with an indication of a sixth information element.

According to the foregoing technical solution, in this application, the terminal device can more flexibly report a relationship between frequency bands in each frequency band set.

With reference to the first aspect, in some implementations of the first aspect, the first information further includes a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship includes switching and/or concurrence.

According to the foregoing technical solution, in this application, the terminal device can report relationships between frequency bands in some or all of the frequency band sets at a time, thereby reducing a reporting amount.

With reference to the first aspect, in some implementations of the first aspect, the at least one frequency band set belongs to at least two frequency band set groups, and a first frequency band set group and a second frequency band set group in the at least two frequency band set groups cannot be switched.

Frequency band sets are grouped, and different set groups cannot be switched. In this application, the network device is enabled to learn of a mode supported by the terminal device when the terminal device performs uplink Tx switching on the at least one carrier set.

With reference to the first aspect, in some implementations of the first aspect, the first information further includes a seventh information element, and the seventh information element indicates a quantity of radio frequency chains supported by a third frequency band set group in the at least two frequency band set groups.

According to the foregoing technical solution, in this application, the network device can learn of a quantity of radio frequency chains that can be switched when the terminal device performs uplink Tx switching on at least one carrier set group, so that the network device can better schedule the terminal device on the at least one carrier set group.

According to a second aspect, an information receiving method is provided, including: A network device receives first information from a terminal device. The first information includes a first information element. The first information element indicates at least two frequency band sets. A first frequency band set in the at least two frequency band sets includes at least one frequency band, and any two frequency band sets in the at least two frequency band sets include at least one same frequency band. The network device configures a first carrier set. A frequency band set including a frequency band to which a carrier in the first carrier set belongs does not belong to the at least two frequency band sets.

According to the foregoing technical solution, in this application, the network device can derive more frequency band sets based on a frequency band set reported by the terminal device. This reduces a frequency band set reporting amount.

With reference to the second aspect, in some implementations of the second aspect, in the at least two frequency band sets, at least three frequency bands in at least three frequency band sets each appear at least twice in the at least three frequency band sets, or all frequency bands in at least three frequency band sets each appear at least twice in the at least three frequency band sets.

According to the foregoing technical solution, in this application, the network device can derive more frequency band sets based on a frequency band set reported by the terminal device. This reduces a frequency band set reporting amount.

According to a third aspect, an information receiving method is provided, including: A network device receives first information from a terminal device. The first information includes a first information element. The first information element indicates at least two frequency band sets. A first frequency band set in the at least two frequency band sets includes at least one frequency band. The first information further includes a second information element. The second information element indicates a first relationship between a second frequency band set and the first frequency band set in the at least two frequency band sets. The first relationship includes switching and/or concurrence. The network device configures M carrier sets. Carriers in the M frequency band sets belong to at least one frequency band in the at least two frequency band sets. A second carrier set in the M carrier sets includes at least one carrier. A relationship between a third carrier set and the second carrier set in the M carrier sets is the first relationship. The second carrier set is a carrier set corresponding to the first frequency band set, the third carrier set is a carrier set corresponding to the second frequency band set, and M is a positive integer greater than or equal to 2.

With reference to the third aspect, in some implementations of the third aspect, all frequency bands in at least one frequency band set belong to a first frequency band combination, the first information further includes a third information element, and the third information element indicates a quantity of radio frequency chains supported by the first frequency band combination.

With reference to the third aspect, in some implementations of the third aspect, the first information includes a fourth information element, and the fourth information element indicates a quantity of radio frequency chains supported by the first frequency band set.

With reference to the third aspect, in some implementations of the third aspect, a third frequency band set in the at least one frequency band set includes a fifth information element, the fifth information element indicates a second relationship between frequency bands in the third frequency band set, and the second relationship includes switching and/or concurrence.

With reference to the third aspect, in some implementations of the third aspect, the first information further includes a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship includes switching and/or concurrence.

With reference to the third aspect, in some implementations of the third aspect, the at least one frequency band set belongs to at least two frequency band set groups, and a first frequency band set group and a second frequency band set group in the at least two frequency band set groups cannot be switched.

With reference to the third aspect, in some implementations of the third aspect, the first information further includes a seventh information element, and the seventh information element indicates a quantity of radio frequency chains supported by a third frequency band set group in the at least two frequency band set groups.

With reference to the third aspect, in some implementations of the third aspect, at least one carrier included in the second carrier set corresponds to a same frequency band in the at least two frequency band sets; or at least one carrier included in the second carrier set corresponds to different frequency bands in the at least two frequency band sets.

According to a fourth aspect, a communication apparatus is provided, including a processing unit, configured to determine first information, where the first information includes a first information element and a second information element, the first information element indicates at least two frequency band sets, a first frequency band set in the at least two frequency band sets includes at least one frequency band, the second information element indicates a first relationship between a second frequency band set and the first frequency band set in the at least two frequency band sets, and the first relationship includes switching and/or concurrence; and a transceiver unit, configured to send the first information to a network device.

With reference to the fourth aspect, in some implementations of the fourth aspect, all frequency bands in at least one frequency band set belong to a first frequency band combination, the first information further includes a third information element, and the third information element indicates a quantity of radio frequency chains supported by the first frequency band combination.

With reference to the fourth aspect, in some implementations of the fourth aspect, the first information includes a fourth information element, and the fourth information element indicates a quantity of radio frequency chains supported by the first frequency band set.

With reference to the fourth aspect, in some implementations of the fourth aspect, a third frequency band set in the at least one frequency band set includes a fifth information element, the fifth information element indicates a second relationship between frequency bands in the third frequency band set, and the second relationship includes switching and/or concurrence.

With reference to the fourth aspect, in some implementations of the fourth aspect, the first information further includes a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship includes switching and/or concurrence.

With reference to the fourth aspect, in some implementations of the fourth aspect, the at least one frequency band set belongs to at least two frequency band set groups, and a first frequency band set group and a second frequency band set group in the at least two frequency band set groups cannot be switched.

With reference to the fourth aspect, in some implementations of the fourth aspect, the first information further includes a seventh information element, and the seventh information element indicates a quantity of radio frequency chains supported by a third frequency band set group in the at least two frequency band set groups.

According to a fifth aspect, a communication apparatus is provided, including: a transceiver unit, configured to receive first information from a terminal device, where the first information includes a first information element, the first information element indicates at least two frequency band sets, a first frequency band set in the at least two frequency band sets includes at least one frequency band, and any two frequency band sets in the at least two frequency band sets include at least one same frequency band; and a processing unit, configured to configure a first carrier set, where a frequency band set including a frequency band to which a carrier in the first carrier set belongs does not belong to the at least two frequency band sets.

With reference to the fifth aspect, in some implementations of the fifth aspect, in the at least two frequency band sets, at least three frequency bands in at least three frequency band sets each appear at least twice in the at least three frequency band sets, or all frequency bands in at least three frequency band sets each appear at least twice in the at least three frequency band sets.

According to a sixth aspect, a communication apparatus is provided, including: a transceiver unit, configured to receive first information from a terminal device, where the first information includes a first information element and a second information element, the first information element indicates at least two frequency band sets, a first frequency band set in the at least two frequency band sets includes at least one frequency band, the second information element indicates a first relationship between a second frequency band set and the first frequency band set in the at least two frequency band sets, and the first relationship includes switching and/or concurrence; and a processing unit, configured to configure M carrier sets, where carriers in the M carrier sets belong to at least one frequency band in the at least two frequency band sets, a second carrier set in the M carrier sets includes at least one carrier, and a relationship between a third carrier set and the second carrier set in the M carrier sets is the first relationship. The second carrier set is a carrier set corresponding to the first frequency band set, the third carrier set is a carrier set corresponding to the second frequency band set, and M is a positive integer greater than or equal to 2.

With reference to the sixth aspect, in some implementations of the sixth aspect, all frequency bands in at least one frequency band set belong to a first frequency band combination, the first information further includes a third information element, and the third information element indicates a quantity of radio frequency chains supported by the first frequency band combination.

With reference to the sixth aspect, in some implementations of the sixth aspect, the first information includes a fourth information element, and the fourth information element indicates a quantity of radio frequency chains supported by the first frequency band set.

With reference to the sixth aspect, in some implementations of the sixth aspect, a third frequency band set in the at least one frequency band set includes a fifth information element, the fifth information element indicates a second relationship between frequency bands in the third frequency band set, and the second relationship includes switching and/or concurrence.

With reference to the sixth aspect, in some implementations of the sixth aspect, the first information further includes a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship includes switching and/or concurrence.

With reference to the sixth aspect, in some implementations of the sixth aspect, the at least one frequency band set belongs to at least two frequency band set groups, and a first frequency band set group and a second frequency band set group in the at least two frequency band set groups cannot be switched.

With reference to the sixth aspect, in some implementations of the sixth aspect, the first information further includes a seventh information element, and the seventh information element indicates a quantity of radio frequency chains supported by a third frequency band set group in the at least two frequency band set groups.

With reference to the sixth aspect, in some implementations of the sixth aspect, at least one carrier included in the second carrier set corresponds to a same frequency band in the at least two frequency band sets; or at least one carrier included in the second carrier set corresponds to different frequency bands in the at least two frequency band sets.

According to a seventh aspect, a communication apparatus is provided, including: a processor and a memory. The processor is coupled to the memory. The memory is configured to store a computer program. The processor is configured to execute the computer program stored in the memory, so that the communication apparatus performs the communication method according to any one of the first aspect or the possible implementations of the first aspect, or the communication apparatus performs the communication method according to any one of the second aspect or the possible implementations of the second aspect, or the communication apparatus performs the communication method according to any one of the third aspect or the possible implementations of the third aspect.

According to an eighth aspect, a computer-readable storage medium storing instructions is provided. When the instructions are run on a computer, the computer is enabled to perform the communication method according to any one of the first aspect and the possible implementations of the first aspect, or the computer is enabled to perform the communication method according to any one of the second aspect and the possible implementations of the second aspect, or the computer is enabled to perform the communication method according to any one of the third aspect and the possible implementations of the third aspect.

### BRIEF DESCRIPTION OF DRAWINGS

FIG. 1 is a schematic diagram of a communication scenario according to this application;
FIG. 2 is a schematic flowchart of an information sending and receiving method according to this application;
FIG. 3 is a schematic flowchart of another information sending and receiving method according to this application;
FIG. 4 is a schematic block diagram of a communication apparatus according to this application; and
FIG. 5 is a schematic block diagram of another communication apparatus according to this application.

### DESCRIPTION OF EMBODIMENTS

Technical solutions in this application are described below with reference to the accompanying drawings.

The technical solutions of embodiments of this application may be applied to various communications systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system.

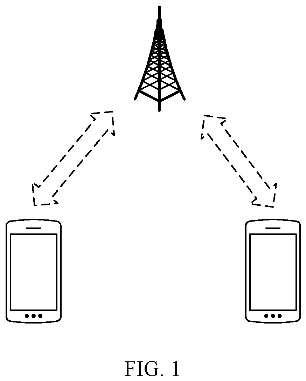

FIG. 1 is a schematic diagram of a communication scenario according to this application.

In the schematic diagram of the communication scenario shown in FIG. 1, a terminal device may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application.

In the schematic diagram of the communication scenario shown in FIG. 1, a network device may be a device configured to communicate with the terminal device. The network device may be a base transceiver station (base transceiver station, BTS) in the global system for mobile communications (global system for mobile communications, GSM) system or the code division multiple access (code division multiple access, CDMA) system, may be a NodeB (NodeB, NB) in the wideband code division multiple access (wideband code division multiple access, WCDMA) system, may be an evolved NodeB (evolved NodeB, eNB or eNodeB) in the LTE system, or may be a radio controller in a cloud radio access network (cloud radio access network, CRAN) scenario. Alternatively, the network device may be a relay station, an access point, a vehicle-mounted device, a wearable device, a network device in the 5G network, a network device in the evolved PLMN, or the like. This is not limited in embodiments of this application.

The following briefly describes some concepts in embodiments of this application.

Carrier aggregation means aggregating at least two component carrier (component carrier, CC) to support a larger transmission bandwidth.

For example, when a plurality of cells (cell) are configured for a terminal device, and each cell includes one downlink carrier and 0 to 2 uplink carriers, the terminal device may activate some of the plurality of cells. However, an uplink capability of some terminal device is limited. As a result, a maximum of two uplink carriers can be configured and activated.

When a CA mode of two uplink carriers is configured for the terminal device, the terminal device can perform time division sending between the two configured carriers, and the terminal device has a total of two radio frequency chains that can be used for simultaneous sending. In this case, the two radio frequency chains may be dynamically allocated on the two carriers. For example, a radio frequency chain 1 is used for sending on a carrier X, and a radio frequency chain 2 is used for sending on a carrier Y Alternatively, the radio frequency chain 1 is not used for sending on the carrier X, and the radio frequency chain 1 and the radio frequency chain 2 are used for sending on the carrier Y

The terminal device can report, to the network device, one or more frequency band combinations that can be used for simultaneous uplink sending. The combination indicates that the terminal device supports simultaneous uplink sending on a frequency band in the combination.

A transmit channel (transmitter, Tx) is a physical concept, and may also be referred to as a radio frequency (radio frequency, RF). In this application, the transmit channel is briefly referred to as a radio frequency chain.

Optionally, the radio frequency chain in this application may also be replaced with a Tx, an antenna, a radio frequency, a transmit channel, a sending port, a receive channel, or any combination thereof.

Optionally, in this application, if a quantity of radio frequency chains of the terminal device on one carrier is X, it means that the terminal device supports uplink transmission in which a quantity of antenna ports is less than or equal to X on the carrier, and does not support uplink transmission in which the quantity of antenna ports is greater than X. In addition, it means that an operation state (or a state of the terminal device) of the terminal device supports uplink transmission in which the quantity of antenna ports is less than or equal to X on the carrier, and does not support uplink transmission in which the quantity of antenna ports is greater than X, where X is a positive integer.

In this application, the radio frequency chain may work in but is not limited to the following manner: The radio frequency chain may receive a baseband signal from a baseband chip, perform radio frequency processing (such as up-conversion, amplification, and filtering) on the baseband signal to obtain a radio frequency signal, and finally radiate the radio frequency signal to space by using an antenna. Specifically, the radio frequency chain may include electronic components such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). The electronic components may be integrated into one or more chips based on a requirement. An antenna may also be considered as a part of the radio frequency chain sometimes.

The antenna port (port) is a logical concept. When actually sending a signal, the terminal device maps an antenna port to a corresponding radio frequency chain. When scheduling the terminal device to transmit data, the network device may explicitly indicate a port number of an antenna port to be used by the terminal device to transmit data.

Optionally, the antenna port may be briefly referred to as a port.

R16 proposes a new uplink mode. To be specific, if the terminal device supports two uplink carriers, the terminal device can perform Tx switching on the two carriers, so that utilization of the radio frequency chain can be improved.

For a terminal device that supports Tx switching on two uplink carriers including two Txs, the protocol defines a sending behavior of the terminal device on the two uplink carriers through Table 1.

Optionally, Tx switching may be replaced with uplink Tx switching, dynamic uplink Tx switching, uplink switching, or dynamic Tx switching. This is not limited in this application.

Details are shown in Table 1:

**Table 1**

| Type | Distribution |
|---|---|
| Case 1 | One Tx on the carrier X and one Tx on the carrier Y |
| (case 1) | |
| Case 2 | No Tx on the carrier X and two Txs on the carrier Y |
| (case 2) | |

The carrier X and the carrier Y represent two uplink carriers, and the Tx represents the radio frequency chain.

Case 1 indicates that the terminal device has one radio frequency chain on the carrier X, and has one radio frequency chain on the carrier Y Case 2 indicates that the terminal device has no radio frequency chain on the carrier X, and has two radio frequency chains on the carrier Y.

It can be learned from Table 1 that the terminal device supports a maximum of one Tx on the carrier X, and supports a maximum of two Txs on the carrier Y

The terminal device may switch between the two cases, that is, may switch one Tx between the two carriers. Switching between the two cases requires a switching time. The switching time may be referred to as an uplink switching gap (uplink switching gap).

The terminal device does not expect to perform transmission on either of the two carriers during the uplink switching gap.

Instead of directly indicating the terminal device to perform Tx switching on the carrier, the protocol indirectly indicates the terminal device to perform Tx switching by using a quantity of ports in uplink transmission of the terminal device on the carrier, so that it is determined whether radio frequency chain switching is required in a current uplink transmission, that is, whether there is a switching time.

Table 2 shows a mapping relationship between the radio frequency chain and an uplink transmission port.

**Table 2**

| Type | Tx on the carrier X and the carrier Y | Uplink transmission port on on the carrier X and the carrier Y |
|---|---|---|
| Case 1 | 1T+1T | 1P+0P |
| (case 1) | | |
| Case 2 | 0T+2T | 0P+2P or 0P+1P |
| (case 2) | | |

Table 2 shows a mapping relationship between the uplink transmission port and the Tx of the terminal device that supports uplink CAin a switched mode (switched UL).

In case 1, that is, when there is one Tx on the carrier X, and there is one Tx on the carrier Y, the terminal device may perform 1-port uplink transmission on the carrier X, and perform no uplink transmission on the carrier Y (1P+0P).

In case 2, that is, when there is no Tx on the carrier X, and there are two Txs on the carrier Y, the terminal device may perform 2-port uplink transmission on the carrier Y and perform no uplink transmission on the carrier X (0P+2P), or perform 1-port uplink transmission on the carrier Y and perform no uplink transmission on the carrier X (0P+1P).

In the protocol, whether a switching time is required is determined based on a quantity of ports in uplink transmission to be performed by the terminal device on two carriers and a quantity of ports in preceding uplink transmission.

For example, when the terminal device is to perform 1-port transmission on one carrier and if a previous transmission of the terminal device is 1-port transmission on another carrier, that is, it indicates that (1P+0P) in Case 1 is switched to (0P+1P) in Case 2, the terminal device needs to perform radio frequency chain switching, and is not expected to perform transmission on either of the two carriers during the uplink switching gap.

Table 3 shows a mapping relationship between the uplink transmission port and the Tx of the terminal device that supports uplink CA in a concurrent mode (dual UL).

Details are shown in Table 3:

**Table 3**

| Type | Tx on the carrier X and the carrier Y | Uplink transmission port on on the carrier X and the carrier Y |
|---|---|---|
| Case 1 | 1T+1T | 1P+0P, 1P+1P, or 0P+1P |
| (case 1) | | |
| Case 2 | 0T+2T | 0P+2P or 0P+1P |
| (case 2) | | |

In case 1, that is, when there is one Tx on the carrier X, and there is one Tx on the carrier Y, the terminal device may perform 1 -port uplink transmission on the carrier X and perform no uplink transmission on the carrier Y (1P+0P), or perform 1-port uplink transmission on the carrier X and perform 1-port uplink transmission on the carrier Y (1P+1P), or perform 1-port uplink transmission on the carrier Y and perform no uplink transmission on the carrier X (0P+1P).

In other words, the terminal device is in an operation state in which 1-port uplink transmission is supported on the carrier X. Alternatively, the terminal device is in an operation state in which 1-port uplink transmission is supported on the carrier Y Alternatively, the terminal device is in an operation state in which 1-port uplink transmission is supported on the carrier X and 1-port uplink transmission is supported on the carrier Y Alternatively, the terminal device is in an operation state in which 2-port uplink transmission is not supported on the carrier X and 2-port uplink transmission is not supported on the carrier Y Alternatively, the terminal device is in an operation state in which 2-port uplink transmission is not supported on the carrier X. Alternatively, the terminal device is in an operation state in which 2-port uplink transmission is not supported on the carrier Y

In case 2, that is, when there is no Tx on the carrier X, and there are two Txs on the carrier Y, the terminal device may perform 2-port uplink transmission on the carrier Y and perform no uplink transmission on the carrier X (0P+2P), or perform 1-port uplink transmission on the carrier Y and perform no uplink transmission on the carrier X (0P+1P).

In other words, the terminal device is in an operation state in which 2-port or 1-port uplink transmission is supported on the carrier Y, and uplink transmission is not supported on the carrier X.

It can be learned from Table 3 that both the case 1 and the case 2 have a 0P+1P case. If the terminal device is to perform 1-port transmission on the carrier Y, and performs no uplink transmission on the carrier X, a Tx state of the terminal device is a Tx state of preceding uplink transmission. In other words, the Tx state of the terminal device does not change, that is, the terminal device does not need a switching time.

It is determined in the protocol, based on a quantity of ports in uplink transmission to be performed by the terminal device on the two carriers, a quantity of ports in preceding uplink transmission, a quantity of supported ports in uplink transmission, or the operation state of the terminal device, whether a switching time is required.

For example, a 2-port transmission is to be performed on one carrier, a previous transmission is 1-port transmission on the carrier, and the terminal device is in an operation state in which 2-port transmission is not supported on the carrier. That is, it indicates that (0P+1P) in Case 1 is switched to (0P+2P) in Case 2. In this case, the terminal device needs to perform Tx switching, and is not expected to perform transmission on either of the two carriers during the uplink switching gap.

For example, 1-port transmission is to be performed on one carrier, and a previous transmission is 1-port transmission on another carrier, and the terminal device is in an operation state in which 2-port transmission is supported on the carrier. That is, it indicates that (0P+1P) in Case 2 is switched to (1P+XP) in Case 1, and a value of X may be 0 or 1. In this case, the terminal device needs to perform Tx switching, and is not expected to perform transmission on either of the two carriers during the uplink switching gap.

In addition, there is a switching time for both the terminal device supporting switched UL and the terminal device supporting dual UL when the following two conditions are met:
Condition 1: 2-port transmission is to be performed on one carrier, and a previous transmission is 1-port uplink transmission on another carrier ((1P+0P) in Case 1 is switched to (0P+2P) in Case 2). In this case, the terminal device needs to perform radio frequency chain switching, and is not expected to perform transmission on either of the two carriers during the uplink switching gap.
Condition 2: 1-port transmission is to be performed on one carrier, and a previous transmission is 2-port uplink transmission on another carrier ((0P+2P) in Case 2 is switched to (1P+0P) in Case 1). In this case, the terminal device needs to perform radio frequency chain switching, and is not expected to perform transmission on either of the two carriers during the uplink switching gap.

In addition, if the terminal device does not perform previous transmission, the Tx state of the terminal device is a Tx state of the previous uplink transmission. In other words, the Tx state of the terminal device remains unchanged.

The terminal device does not need to perform switching between different port uplink transmission in a same case, and therefore does not need a switching time.

Because a maximum quantity of ports supported on the carrier X is different from a maximum quantity of ports supported on the carrier Y, when configuring a carrier for the terminal device, the network device needs to specify whether the carrier is the carrier X or the carrier Y, so as to facilitate differentiation.

The foregoing briefly describes related concepts in embodiments of this application.

In R16, a terminal device may report a plurality of frequency band sets to a network device, and a quantity of carrier sets configured by the network device for the terminal device is not limited. However, when the network device configures at least two carrier sets for the terminal device and does not know a relationship between the at least two carrier sets configured for the terminal device, scheduling of the terminal device by the network device is affected. The carrier that is configured by the network device for the terminal device and on which radio frequency chain switching can be performed is based on a frequency band combination reported by the terminal device to the network device.

In a possible case, all or some of carriers and frequency bands may be replaced with each other, and all or some of the carrier sets and the frequency band sets may also be replaced with each other.

In a possible case, all or some of the frequency bands may be replaced with carriers that belong to the frequency bands.

Optionally, one frequency band set may include one or more frequency bands, and a carrier in the carrier set may also be replaced with a frequency band in the frequency band set.

In a possible case, one frequency band includes one or more carriers.

In a possible case, a plurality of frequency bands in the frequency band set may have a same frequency band, or may have different frequency bands.

In a possible case, a carrier in a frequency band set includes at least one carrier in at least one frequency band in the frequency band set.

In view of the foregoing technical problem, this application provides a capability reporting method, to enable the network device to schedule the terminal device when the network device configures at least two carrier sets for the terminal device and does not know a relationship between the at least two carrier sets configured for the terminal device.

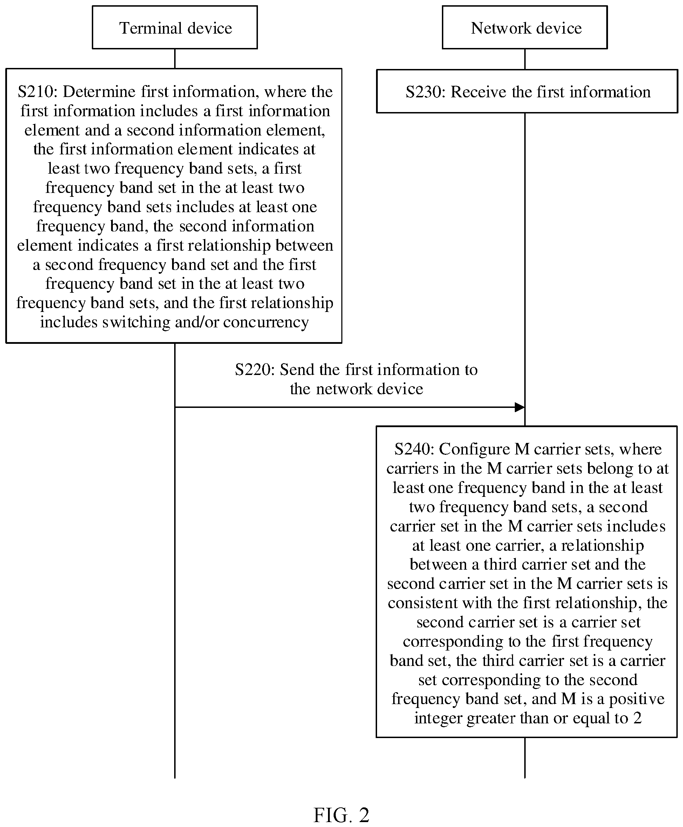

The following describes, with reference to FIG. 2, an information sending and receiving method provided in this application.

FIG. 2 shows an information sending and receiving method according to this application. The method is performed by a terminal device and a network device. Details are shown in FIG. 2.

S210: The terminal device determines first information, where the first information includes a first information element and a second information element, the first information element indicates at least two frequency band sets, a first frequency band set in the at least two frequency band sets includes at least one frequency band, the second information element indicates a first relationship between a second frequency band set and the first frequency band set in the at least two frequency band sets, and the first relationship includes switching or concurrency.

S220: The terminal device sends the first information to the network device.

S230: The network device receives the first information from the terminal device.

S240: The network device configures M carrier sets, where carriers in the M carrier sets belong to at least one frequency band in the at least two frequency band sets, a second carrier set in the M carrier sets includes at least one carrier, a relationship between a third carrier set and the second carrier set in the M carrier sets is the first relationship between the second frequency band set and the first frequency band set, the second carrier set is a carrier set corresponding to the first frequency band set, the third carrier set is a carrier set corresponding to the second frequency band set, and M is a positive integer greater than or equal to 2.

It should be understood that the second carrier set in the M carrier sets may be any carrier set in the M carrier sets, the second carrier set includes at least one carrier, the third carrier set also includes at least one carrier, and the relationship between the third carrier set and the second carrier set is consistent with the first relationship.

It should be understood that a carrier set is a carrier set to which a frequency band set corresponds (or belongs), which means that all carriers in the carrier set belong to at least one frequency band in the frequency band set.

For example, if the second carrier set includes a carrier 1 and a carrier 2, the first frequency band set includes at least a frequency band A and a frequency band B, the carrier 1 belongs to the frequency band A, and the carrier 2 belongs to the frequency band B, the second carrier set is a carrier set to which the first frequency band set corresponds (or belongs).

For example, if the second carrier set includes a carrier 1 and a carrier 2, the first frequency band set includes at least a frequency band A, the carrier 1 belongs to the frequency band A, and the carrier 2 belongs to the frequency band A, the second carrier set is a carrier set to which the first frequency band set corresponds (or belongs).

For example, if the second carrier set includes a carrier 1, a carrier 2, and a carrier 3, the first frequency band set includes at least a frequency band A, a frequency band B, and a frequency band C, the carrier 1 belongs to the frequency band A, the carrier 2 belongs to the frequency band A, and the carrier 3 belongs to the frequency band B, the second carrier set is a carrier set to which the first frequency band set corresponds (or belongs).

For example, it is assumed that the second carrier set includes a carrier 1 and a carrier 2, the third carrier set includes a carrier 3 and a carrier 4, the first frequency band set includes a frequency band A and a frequency band B, the second frequency band set includes a frequency band C and a frequency band D, the carrier 1 belongs to the frequency band A, the carrier 2 belongs to the frequency band B, the carrier 3 belongs to the frequency band C, the carrier 4 belongs to the frequency band D, and the first relationship between the first frequency band set and the second frequency band set is a switched relationship. In this case, the second carrier set and the third carrier set are in a switched relationship.

Optionally, the two carrier sets are in a concurrent relationship. In other words, when scheduling or configuring the terminal device to perform transmission on at least one carrier in a carrier set, the network device may also schedule or configure the terminal device to perform transmission on at least one carrier in another carrier set.

Optionally, the two carrier sets are in a switched relationship. In other words, when scheduling or configuring the terminal device to perform transmission on at least one carrier in a carrier set, the network device cannot schedule or configure the terminal device to perform transmission on at least one carrier in another carrier set.

Optionally, configuration information provided by the network device for the terminal device complies with the first information.

Optionally, at least one of the at least two frequency band sets reported by the terminal device is a frequency band set, supported by the terminal device, that can be used for Tx switching.

Optionally, the terminal device may perform Tx switching on a carrier in at least one of the M carrier sets configured by the network device.

Optionally, if the second information element is not reported, the relationship between the first frequency band set and the second frequency band set may be switching or concurrence by default.

Optionally, the second information element is forcibly reported.

According to the foregoing technical solution, in this application, the network device is enabled to learn of a mode supported by the terminal device when the terminal device performs uplink Tx switching on the at least one carrier set, so that the network device can normally schedule the terminal device when configuring the at least one carrier set for the terminal device.

It should be understood that in step S210, the first information may be a frequency band combination used for uplink radio frequency chain switching, or a frequency band combination supporting uplink radio frequency chain switching, and indicates at least one frequency band combination reported by the terminal device to the network device, where one frequency band combination includes at least one frequency band.

The first information may include a first information element. For example, the first information element may indicate a frequency band set for uplink radio frequency chain switching, and indicates at least one frequency band set, where one frequency band set includes at least two frequency bands.

For ease of description, in this application, an example in which one frequency band combination includes four frequency bands and one frequency band set includes two frequency bands is used to describe the technical solutions of this application. However, such description does not impose a limitation.

It should be noted that when the first relationship between the first frequency band set and the second frequency band set has been determined in the first information reported by the terminal device, the first frequency band set or the second frequency band set may include only one frequency band.

For example, when the terminal device reports two frequency band sets: a frequency band set {A, B} and a frequency band set {C}, the two frequency band sets may be simultaneous sent, that is, a concurrent mode is supported, or the two frequency band sets are sent in a time division manner, that is, a switched mode is supported. Therefore, after the relationship between the two frequency band sets is determined, either of the two frequency band sets may include only one frequency band.

For example, when a frequency band set and any other frequency band set in the at least one frequency band set reported by the terminal device do not have a definite or specific relationship, the frequency band set needs to include at least two frequency bands.

Optionally, the at least two frequency bands may be the same or different.

Optionally, when a frequency band in a frequency band set reported by the terminal device supports at least two carriers, and the terminal device supports radio frequency chain switching on the at least two carriers, the frequency band set may include only one frequency band.

It should be understood that all frequency bands in the at least one frequency band set belong to one frequency band combination, and frequency bands in one frequency band set may be the same or different. This is not limited in this application.

It should be understood that the first information may further include a second information element, and the second information element indicates the relationship between the first frequency band set and the second frequency band set.

It should be understood that the first frequency band set and the second frequency band set are frequency band sets that support uplink radio frequency chain switching. The terminal device may perform uplink radio frequency chain switching in a frequency band in one of the frequency band sets.

For example, the terminal device may indicate, by reporting a maximum quantity of radio frequency chains supported by a carrier in each frequency band in the frequency band set, a specific switching rule or switched mode supported by the terminal device.

For example, the switching rule may be a switching rule corresponding to Table 2, a switching rule corresponding to Table 3, or a switching rule corresponding to Table 4.

For example, if the terminal device reports a maximum quantity of 2 of radio frequency chains supported on each of two carriers in a carrier set and supports the concurrent mode (dual UL) is supported, it indicates that the terminal device supports the switching rule corresponding to Table 4.

For example, if the terminal device reports a maximum quantity of 2 of radio frequency chains supported on a carrier in a carrier set, and a maximum quantity of 1 of radio frequency chains supported on another carrier in the carrier set, and supports the concurrent mode (dual UL), it indicates that the terminal device supports the switching rule corresponding to Table 3.

In a possible case, a maximum quantity of ports of a sounding reference signal (sounding reference signal, SRS) resource is equal to a maximum quantity of ports of all periodic SRS resources, semi-persistent SRS resources, and aperiodic SRS resources configured by a base station.

In a possible case, a maximum quantity of ports of an SRS resource is equal to a maximum quantity of ports of all periodic SRS resources, activated semi-persistent SRS resources, and aperiodic SRS resources configured by the base station.

In a possible case, a maximum quantity of radio frequency chains supported by the terminal device on a carrier is equal to or replaced with a maximum quantity of ports, reported by the terminal device, of an SRS resource on a frequency band to which the carrier belongs, a maximum quantity of multiple-input multiple-output (multiple input-multiple output, MIMO) layers supported by uplink transmission on the carrier, or a maximum quantity of SRS resources in an SRS resource set in a non-codebook transmission scenario on the carrier; or a largest value among the three values.

In a possible case, a maximum quantity of radio frequency chains supported by the terminal device on a carrier is equal to or replaced with a maximum quantity of ports, configured by the base station for the terminal device, of an SRS resource on the carrier.

In a possible case, a maximum quantity of radio frequency chains supported by a carrier is equal to a maximum quantity of radio frequency chains of the carrier.

Table 4 shows a mapping relationship between a radio frequency chain and an uplink transmission port when a concurrent mode (dual UL) is supported. A difference of Table 4 from Table 3 lies in that a maximum quantity of radio frequency chains on a carrier X in Table 4 may be 2.

**Table 4**

| Type | Tx on the carrier X and a carrier Y | Uplink transmission port on on the carrier X and the carrier Y |
|---|---|---|
| Case 1 | 1T+1T | 1P+0P, 1P+1P, or 0P+1P |
| (case 1) | | |
| Case 2 | 0T+2T | 0P+2P or 0P+1P |
| (case 2) | | |
| Case 3 | 2T+2T | 2P+0P or 1P+0P |
| (case 3) | | |

For example, when reported maximum quantities of radio frequency chains supported by the two carriers in the frequency band set are respectively 1T and 2T, the network device may consider that the terminal device supports dynamic Tx switching in R16. If the reported maximum quantities of radio frequency chains supported by the two carriers in the frequency band set are respectively 2T and 2T, the network device may consider that the terminal device supports dynamic Tx switching in R17.

If the two frequency band sets are in a switched relationship, the network device may consider that the terminal device has a total of 2 Txs in the two frequency band sets, or there are a total of 2 Txs in all frequency bands in the two frequency band sets. In this case, when performing transmission in at least one frequency band in one of the two frequency band sets, the terminal device cannot perform transmission in at least one frequency band in the other frequency band set in the two frequency band sets.

If the two frequency band sets are in a concurrent relationship, the network device may consider that the terminal device has 2 Txs in each frequency band set, or there are a total of 2 Txs in all frequency bands in each frequency band set. In this case, when performing transmission in at least one frequency band in one of the two frequency band sets, the terminal device can also perform transmission in at least one frequency band in the other frequency band set in the two frequency band sets. In other words, it indicates that the two frequency band sets can be independently scheduled.

It should be understood that in step S210, switching in the first relationship means that the terminal device cannot perform uplink transmission on at least one carrier in the second frequency band set when performing uplink transmission on at least one carrier in the first frequency band set.

For example, the terminal device is to perform uplink transmission on at least one carrier in the first frequency band set, and a previous uplink transmission of the terminal device is uplink transmission on at least one carrier in the second frequency band set. In this case, the terminal device cannot perform uplink transmission on any carrier in the two frequency band sets in a first time period. The terminal device needs to perform radio frequency chain switching in the first time period.

Optionally, if second transmission is an uplink transmission before first transmission, it means that the first transmission and the second transmission are two adjacent transmissions in time domain, and the second transmission is performed before the first transmission.

Optionally, the first time period is reported by the terminal device, and indicates Tx switching duration for performing Tx switching between the two frequency band sets.

Optionally, the first time period is equal to Tx switching duration for performing Tx switching on a carrier in one of the two frequency band sets.

Optionally, the first time period is equal to a larger value of Tx switching duration for performing Tx switching on a carrier in one of the two frequency band sets and Tx switching duration for performing Tx switching on a carrier in the other frequency band set in the two frequency band sets.

It should be understood that in step S210, concurrence in the first relationship means that the terminal device can perform uplink transmission on at least one carrier in the second frequency band set when performing uplink transmission on at least one carrier in the first frequency band set.

Table 5 shows a maximum quantity of radio frequency chains supported by a carrier in each frequency band in the frequency band set.

**Table 5**

| Frequency band | A | B | C | D |
|---|---|---|---|---|
| Maximum quantity of radio frequency chains | 1 | 1 | 2 | 2 |

For example, the terminal device reports two frequency band sets: {A, C}, and {B, D}, and a maximum quantity of radio frequency chains supported by a carrier in each frequency band is shown in Table 5. In this case, if the terminal device further reports the second information element, the network device may configure two carrier sets for the terminal device. A relationship between the two carrier sets may be configured based on an indication of the second information element.

It should be understood that the second information element is carried in the first information, so that in this application, the network device can normally schedule the terminal device when configuring a plurality of carrier sets for the terminal device.

Optionally, the first information may further include a third information element, and the third information element indicates a quantity of radio frequency chains supported by the terminal device in a first frequency band combination.

Optionally, in this application, a quantity of radio frequency chains supported by a frequency band combination, a quantity of radio frequency chains of a frequency band combination, and a maximum quantity of radio frequency chains supported by a frequency band combination may be replaced with each other.

Optionally, in this application, a quantity of radio frequency chains supported by a frequency band set, a quantity of radio frequency chains of a frequency band set, and a maximum quantity of radio frequency chains supported by a frequency band set may be replaced with each other.

For example, when all frequency bands in the two frequency band sets reported by the terminal device, that is, the frequency bands A, B, C, and D, belong to the first frequency band combination, the third information element indicates a total quantity of Txs supported by all frequency band sets in the first frequency band combination, or indicates a total quantity of Txs supported by all carriers in all frequency band sets.

For example, in Table 3, a maximum quantity of radio frequency chains supported by the carrier X is 1, a maximum quantity of radio frequency chains supported by the carrier Y is 2, and a maximum quantity of radio frequency chains supported by a frequency band set (defined as a fifth frequency band set) including a frequency band in which the carrier X is located and a frequency band in which the carrier Y is located is 2. If a frequency band combination includes only the fifth frequency band set, a quantity of radio frequency chains supported by the frequency band combination is 2.

For example, in Table 4, the maximum quantity of radio frequency chains supported by the carrier X is 2, the maximum quantity of radio frequency chains supported by the carrier Y is 2, and a maximum quantity of radio frequency chains supported by a frequency band set (defined as a sixth frequency band set) including the frequency band in which the carrier X is located and the frequency band in which the carrier Y is located is 2. If a frequency band combination includes only the sixth frequency band set, a quantity of radio frequency chains supported by the frequency band combination is 2.

Optionally, a quantity of radio frequency chains supported by a carrier set may be a maximum value among maximum quantities of radio frequency chains supported by all carriers in the carrier set, as shown in Table 3.

For example, if a frequency band combination includes the fifth frequency band set and the sixth frequency band set, and a first relationship between the two frequency band sets is a switched relationship, a quantity of radio frequency chains supported by the frequency band combination may be 2.

For example, if a frequency band combination includes the fifth frequency band set and the sixth frequency band set, and a first relationship between the two frequency band sets is a concurrent relationship, a quantity of radio frequency chains supported by the frequency band combination may be 4.

Optionally, if quantities of radio frequency chains supported by all frequency band sets in a frequency band combination are equal, a quantity of radio frequency chains supported by each frequency band set may be deduced by using a first relationship between the frequency band sets in the frequency band combination. This can reduce a reporting amount of the terminal.

For example, if a frequency band combination includes two frequency band sets, a first relationship between the two frequency band sets is a switched relationship, and a quantity of radio frequency chains supported by the frequency band combination is 2, a quantity of radio frequency chains supported by each frequency band set is 2.

For example, if a frequency band combination includes two frequency band sets, a first relationship between the two frequency band sets is a concurrent relationship, and a quantity of radio frequency chains supported by the frequency band combination is 4, a quantity of radio frequency chains supported by each frequency band set is 2.

Optionally, if a frequency band combination does not have a corresponding third information element, a quantity of radio frequency chains supported by the frequency band combination may be 2 by default.

Optionally, a quantity of radio frequency chains supported by a frequency band combination may be replaced with a quantity of radio frequency chains for performing Tx switching in a frequency band combination, or may be replaced with a quantity of radio frequency chains for performing Tx switching between at least one frequency band set in a frequency band combination.

For example, if a frequency band combination includes two sixth frequency band sets (frequency bands in the two sixth frequency band sets may be different), and a first relationship between the two sixth frequency band sets is a switched relationship, a quantity of radio frequency chains for performing Tx switching in the frequency band combination is 2.

It should be understood that, if the first information further includes the third information element, when quantities of radio frequency chains supported by different frequency band sets can be 2 and other values, in this application, the network device can be enabled to better schedule the terminal device.

According to the foregoing technical solution, in this application, the network device is enabled to learn of a quantity of radio frequency chains that can be switched when the terminal device performs uplink Tx switching on at least one carrier set, so that the network device can more flexibly schedule the terminal device on the at least one carrier set.

Optionally, the first information may further include a fourth information element, where the fourth information element indicates a quantity of radio frequency chains supported by the first frequency band set, or a total quantity of Txs supported by all carriers in the frequency band set.

For example, when the frequency band set {A, C} supports four Txs, the frequency band set {B, D} supports two Txs, and the terminal device switches between the two frequency band sets, some Txs in the frequency band set {A, C} with a larger quantity of Txs can be switched only between the two frequency band sets, and the remaining Txs cannot be shared by the frequency band set {B, D}.

It should be understood that when different frequency band sets in the first frequency band combination include different quantities of Txs, the fourth information element is carried in the first information, so that in this application, the network device can better schedule the terminal device in this scenario.

Optionally, if a frequency band set does not have the corresponding fourth information element, a quantity of radio frequencies supported by the frequency band set is 2 by default.

According to the foregoing technical solution, in this application, when quantities, reported by the terminal device, of radio frequency chains supported by at least one frequency band set are different, the network device can learn of a quantity of radio frequency chains supported by each frequency band set, so that the network device can more flexibly schedule the terminal device on the at least one carrier set.

Optionally, in this application, a quantity of radio frequency chains supported by a carrier and a maximum quantity of radio frequency chains of a carrier may be replaced with each other.

Optionally, a quantity of radio frequency chains supported by a frequency band combination may be deduced from quantities of radio frequency chains supported by all frequency band sets in the frequency band combination. This can reduce a reporting amount of the terminal.

For example, if a frequency band combination includes two frequency band sets, a first relationship between the two frequency band sets is a switched relationship, and a quantity of radio frequency chains supported by each of the two frequency band sets is 2, a quantity of radio frequency chains supported by the frequency band combination is 2. For example, if frequency band sets included in a frequency band combination are all in a switched relationship, a quantity of radio frequency chains supported by the frequency band combination may be a maximum value among quantities of radio frequency chains supported by all the frequency band sets included in the frequency band combination.

For example, if a frequency band combination includes two frequency band sets, a first relationship between the two frequency band sets is a concurrent relationship, and a quantity of radio frequency chains supported by each of the two frequency band sets is 2, a quantity of radio frequency chains supported by the frequency band combination is 4, namely, a sum of quantities of radio frequency chains supported by the two frequency band sets.

For example, if a frequency band combination includes three frequency band sets, a first relationship between the three frequency band sets is a switched relationship, and a quantity of radio frequency chains supported by each of the three frequency band sets is 2, a quantity of radio frequency chains supported by the frequency band combination is 2.

For example, if a frequency band combination includes two frequency band sets, a first relationship between the two frequency band sets is a concurrent relationship, a quantity of radio frequency chains supported by one frequency band set is 2, and a quantity of radio frequency chains supported by the other frequency band set is 4, a quantity of radio frequency chains supported by the frequency band combination is 6.

Optionally, a third frequency band set includes a fifth information element. The fifth information element indicates a second relationship in the third frequency band set. The second relationship includes switching and/or concurrence.

When the terminal device adds the fifth information element to each frequency band set, the fifth information element indicates a second relationship between frequency bands in the frequency band set, that is, the second relationship includes switching and/or concurrence.

For example, when the terminal device does not report the fifth information element of the third frequency band set, a relationship between frequency bands in the third frequency band set complies with an indication of a sixth information element in the first information. The sixth information element indicates a third relationship between frequency bands in each frequency band set in at least one frequency band combination. A relationship between frequency bands in a fourth frequency band set in the at least one frequency band set complies with the third relationship, that is, the third relationship includes switching and/or concurrency.

According to the foregoing technical solution, in this application, the terminal device can report relationships between frequency bands in some or all of the frequency band sets at a time, thereby reducing a reporting amount.

It should be noted that, if a fifth information element corresponding to a frequency band set is reported in the frequency band set, a relationship between frequency bands in the frequency band set complies with an indication of the fifth information element; or
if a frequency band set does not include a fifth information element corresponding to the frequency band set, a relationship between frequency bands in the frequency band set complies with an indication of the sixth information element.

Optionally, if a frequency band in a frequency band set reported by the UE supports a plurality of carriers, the UE supports radio frequency chain switching on the plurality of carriers, and the UE reports a fifth information element corresponding to the frequency band set, a relationship between the plurality of carriers complies with an indication of the fifth information element corresponding to the frequency band set.

Optionally, if a frequency band in a frequency band set reported by the UE supports a plurality of carriers, and the UE supports radio frequency chain switching on the plurality of carriers, but the UE does not report a fifth information element corresponding to the frequency band set, a relationship between the plurality of carriers complies with an indication of the sixth information element.

Optionally, if a frequency band in a frequency band set reported by the UE supports a plurality of carriers, and the UE supports radio frequency chain switching on the plurality of carriers, a relationship between the plurality of carriers complies with an indication of an eighth information element corresponding to the frequency band set. The eighth information element indicates a fourth relationship between a plurality of multiple carriers in a frequency band switching and/or concurrence and/or sharing.

If at least two carriers are in a sharing relationship, it may be understood that if at least one radio frequency chain is on one of the at least two carriers, the at least one radio frequency chain is available on the at least two carriers at the same time.

Optionally, if the at least two carriers (or frequency bands) are in a concurrent relationship, it may be understood that the UE can be scheduled or configured to perform uplink transmission on the at least two carriers (or frequency bands) at the same time.

Optionally, if the at least two carriers (or frequency bands) are in a switched relationship, it may be understood that the UE cannot be scheduled or configured to perform uplink transmission on the at least two carriers (or frequency bands) at the same time.

According to the foregoing technical solution, in this application, the terminal device can more flexibly report a relationship between frequency bands in each frequency band set.

Optionally, the at least two frequency band sets reported by the terminal device may belong to at least two frequency band set groups. For example, when the terminal device reports frequency band sets {A, C}, {B, D}, {A, D} and {C, D}, the frequency band sets {A, C} and {B, D} may belong to a first frequency band set group, and the frequency band sets {A, D} and {C, D} may belong to a second frequency band set group. At least two frequency band sets in each frequency band set group may be switched and concurrent, but frequency band sets in different set groups cannot be switched.

For example, when the terminal device reports a second frequency band combination, and the second frequency band combination includes eight frequency bands A, B, C, D, E, F, G, and H, which are grouped into {A, B}, {C, D}, {E, F}, {G, H}, the first frequency band set group includes frequency band sets {A, B} and {C, D}, and the second frequency band set group includes frequency band sets {E, F} and {G, H}. The frequency band set groups do not overlap. At least two frequency band sets in each frequency band set group may be switched and concurrent, but frequency band sets in different set groups cannot be switched.

For example, it is assumed that all frequency bands in frequency band sets in the first frequency band set group are low frequency bands, and all frequency bands in frequency band sets in the second frequency band set group are high frequency bands. In this case, at least two frequency band sets in the first frequency band set group may be switched and/or concurrent, at least two frequency band sets in the second frequency band set group may be switched and/or concurrent, and the frequency band set in the first frequency band set group and the frequency band set in the second frequency band set group cannot be switched.

Frequency band sets are grouped, and different set groups cannot be switched. In this application, the network device is enabled to learn of a mode supported by the terminal device when the terminal device performs uplink Tx switching on the at least one carrier set.

Further, optionally, the first information may further include a seventh information element. The seventh information element indicates a quantity of radio frequency chains supported by a third frequency band set group in the at least two frequency band set groups, or indicates a total quantity of Txs supported on all carriers in the third frequency band set group. The third frequency band set group is any one of the at least two frequency band set groups.

Optionally, for a relationship between a frequency band set group and a frequency band set, refer to the foregoing relationship between a frequency band combination and a frequency band set. Details are not described herein again.

Optionally, for a relationship between a frequency band set group and a frequency band combination, refer to the foregoing relationship between a frequency band set and a frequency band combination. Details are not described herein again.

Optionally, for description of a quantity of radio frequency chains supported by the frequency band set group, refer to the foregoing description of the quantity of radio frequency chains supported by the frequency band combination.

Optionally, a quantity of radio frequency chains supported by a frequency band set group may be replaced with a quantity of radio frequency chains for performing Tx switching in a frequency band set group, or may be replaced with a quantity of radio frequency chains for performing Tx switching between at least one frequency band set in a frequency band set group.

With classification of the frequency band sets, in this application, the terminal device can separately perform switching in high frequency and low frequency when supporting both the high frequency and the low frequency.

It should be understood that in step S240, the network device may configure M carrier sets for the terminal device, and at least one carrier included in the second carrier set in the M carrier sets may belong to a same frequency band or may belong to different frequency bands. Carriers in the carrier set may be simultaneously sent or may be sent in a time division manner. Carriers between different carrier sets may also be simultaneously sent (concurrent mode) or sent in a time division manner (switched mode).

For example, if the network device configures three carrier sets for the terminal device: a carrier set 1 {CC 1, CC 2}, a carrier set 2 {CC 3, CC 4}, and a carrier set 3 {CC 5}, two carriers in the carrier set 1 may belong to a same frequency band, and two carriers in the carrier set 2 may belong to two different frequency bands. In addition, the two carriers in the carrier set 1 may be sent simultaneously (concurrent relationship), the two carriers in the carrier set 2 may be sent simultaneously (concurrent relationship), the carrier set 1 and the carrier set 2 may be sent simultaneously (concurrent relationship), the carrier set 3 and the carrier set 1 may be sent in a time division manner (switched relationship), and the carrier set 3 and the carrier set 2 may also be sent in a time division manner (switched relationship).

Optionally, before the network device configures the three carrier sets for the terminal device, the terminal device reports at least three frequency band sets to the network device. A frequency band set 1 includes at least a frequency band 1, a frequency band set 2 includes at least a frequency band 3 and a frequency band 4, and a frequency band set 3 includes at least a frequency band 5. A relationship between frequency bands in the frequency band set 1 or a relationship between a plurality of carriers in the frequency band includes at least a concurrent relationship. A relationship between frequency bands in the frequency band set 2 includes at least a concurrent relationship. A first relationship between the frequency band set 1 and the frequency band set 2 is a concurrent relationship. A first relationship between the frequency band set 1 and the frequency band set 3 is a switched relationship. A first relationship between the frequency band set 2 and the frequency band set 3 is a switched relationship. The CC 1 and the CC 2 belong to the frequency band 1, the CC 3 belongs to the frequency band 3, the CC 4 belongs to the frequency band 4, and the CC 5 belongs to the frequency band 5.

For example, if the first relationship between the frequency band set 1 and the frequency band set 2 is a switched relationship, a carrier belonging to a frequency band in the frequency band set 1 and a carrier belonging to a frequency band in the frequency band set 2 are in a switched relationship.

For example, if the first relationship between the frequency band set 1 and the frequency band set 2 is a concurrent relationship, a carrier belonging to a frequency band in the frequency band set 1 and a carrier belonging to a frequency band in the frequency band set 2 are in a concurrent relationship.

For example, if frequency bands in a frequency band set are in a switched relationship, carriers belonging to different frequency bands in the frequency band set are in a switched relationship.

For example, if frequency bands in a frequency band set are in a concurrent relationship, carriers belonging to different frequency bands in the frequency band set are in a concurrent relationship.

It should be understood that when the terminal device reports the first relationship between frequency band sets to the network device, a relationship between the carrier sets configured by the network device for the terminal device also complies with the first relationship, or a relationship between the carrier sets configured by the network device for the terminal device is consistent with the first relationship. A carrier in the carrier set belongs to a frequency band in the frequency band set.

Optionally, in this application, the carrier set may be replaced with a carrier group, and the frequency band set may also be replaced with a frequency band group. This is not specifically limited in this application.

According to the foregoing technical solution, in this application, the network device can learn of a quantity of radio frequency chains that can be switched when the terminal device performs uplink Tx switching on at least one carrier set group, so that the network device can better schedule the terminal device on the at least one carrier set group.

It should be noted that, in the foregoing technical solution, the frequency band sets each include at least two frequency bands, and the frequency band sets may include only a same frequency band, for example, a frequency band set {A, A}.

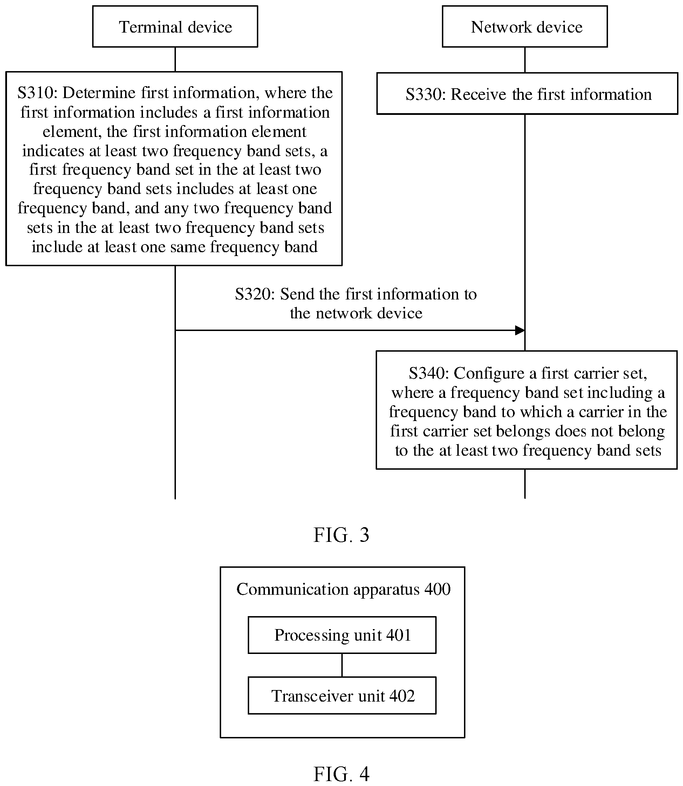

FIG. 3 shows another information sending and receiving method according to this application. The method is performed by a network device and a terminal device. A specific method is shown in FIG. 3.

S310: The terminal device determines first information, where the first information includes a first information element, the first information element indicates at least two frequency band sets, a first frequency band set in the at least two frequency band sets includes at least one frequency band, and any two frequency band sets in the at least two frequency band sets include at least one same frequency band.

S320: The terminal device sends the first information to the network device.

S330: The network device receives the first information from the terminal device.

S340: The network device configures a first carrier set, where a frequency band set including a frequency band to which a carrier in the first carrier set belongs does not belong to the at least two frequency band sets.

Optionally, that a set A belongs to a set B means that all elements in the set A exist in the set B. If an element in the set A is not in the set B, the set A does not belong to the set B.

It should be understood that in step S310, when the terminal device reports at least two frequency band sets, and any two frequency band sets in the at least two frequency band sets include at least one same frequency band, the network device considers that the terminal device supports dynamic Tx switching on a new frequency band set including the plurality of frequency bands. Alternatively, when the terminal device reports at least two frequency band sets, any two frequency band sets in the at least two frequency band sets include at least one same frequency band, and a quantity of radio frequency chains supported by the same frequency band that is reported is not zero, the network device considers that the terminal device supports dynamic Tx switching on a new frequency band set including the plurality of frequency bands. The new frequency band set herein includes at least one same frequency band.

Specifically, if the frequency band sets reported by the terminal device are {A, C} and {C, D}, and a same frequency band {C} exists in the frequency band set {A, C} and the frequency band set {C, D}, the network device may consider that the terminal device supports dynamic Tx switching on a frequency band set {A, C, D}. When there is a Tx on A or D, the Tx can be switched to C. When there is a Tx on C, the Tx can be switched to A or D. When there is a Tx on A, the Tx cannot be switched to D. When there is a Tx on D, the Tx cannot be switched to A.

In this way, the network device can configure a new carrier set for the terminal device. A frequency band set including a frequency band to which a carrier in the new carrier set belongs is or belongs to the frequency band set {A, C, D}, and the frequency band set including the frequency band to which the carrier in the new carrier set belongs does not belong to the frequency band set reported by the terminal device.

It should be understood that, because only some of frequency bands in the frequency band set {A, C} and the frequency band set {C, D} are the same, switching cannot be randomly performed in different frequency bands during Tx switching. Tx switching can be performed only when Tx exists in another frequency band in the frequency band set reported by the terminal device.

It should be understood that in this application, supporting of dynamic Tx switching in a set of frequency bands is equivalent to supporting of dynamic Tx switching on a carrier in the set of frequency bands.

For another example, if the frequency band sets reported by the terminal device are {A, C} and {C, D}, and the terminal device reports a maximum quantity of radio frequency chains supported by each carrier in each frequency band set shown in Table 6, the network device may consider that the terminal device supports dynamic Tx switching in the frequency band set {A, C, D}. When there is a Tx on A or D, the Tx can be switched to C. When there is a Tx on C, the Tx can be switched to A or D. When there is a Tx on A, the Tx cannot be switched to D. When there is a Tx on D, the Tx cannot be switched to A.

In this way, the network device can configure a new carrier set for the terminal device. A frequency band set including a frequency band to which a carrier in the new carrier set belongs is or belongs to the frequency band set {A, C, D}, and the frequency band set including the frequency band to which the carrier in the new carrier set belongs does not belong to the frequency band set reported by the terminal device.

**Table 6**

| Frequency band | A | C | D |
|---|---|---|---|
| Maximum quantity of radio frequency chains | 1 | 2 | 2 |

In a possible implementation, in the at least two frequency band sets reported by the terminal device, if at least three frequency bands in at least three frequency band sets appear at least twice in the at least three frequency band sets, or all frequency bands in at least three frequency band sets appear at least twice in the at least three frequency band sets, the network device considers that the terminal device supports dynamic Tx switching in a new frequency band set. The new frequency band set includes the at least three frequency bands that appear at least twice.

For example, if the frequency band sets reported by the terminal device are {A, C}, {A, D}, {B, C}, and {C, D}, and frequency bands A, C, and D each appear twice in the frequency band sets {A, C}, {A, D}, and {C, D}, the network device may consider that the terminal device supports dynamic Tx switching in the frequency band set {A, C, D}. In this way, the network device can configure a new carrier set for the terminal device. A frequency band set including a frequency band to which a carrier in the new carrier set belongs is or belongs to the frequency band set {A, C, D}, and the frequency band set including the frequency band to which the carrier in the new carrier set belongs does not belong to the frequency band set reported by the terminal device.

For example, if the frequency band sets reported by the terminal device are {A, C}, {A, D}, {B, C}, and {C, D}, and the terminal device reports a maximum quantity of radio frequency chains supported by each carrier in each frequency band set shown in Table 7, the network device may consider that the terminal device supports dynamic Tx switching in the frequency band set {A, C, D}.

In this way, the network device can configure a new carrier set for the terminal device. A frequency band set including a frequency band to which a carrier in the new carrier set belongs is or belongs to the frequency band set {A, C, D}, and the frequency band set including the frequency band to which the carrier in the new carrier set belongs does not belong to the frequency band set reported by the terminal device.

**Table 7**

| Frequency band | A | B | C | D |
|---|---|---|---|---|
| Maximum quantity of radio frequency chains | 1 | 0 | 2 | 2 |

For another example, if the frequency band sets reported by the terminal device are {A, C}, {A, D}, {B, C}, {C, D}, {A, B}, and {B, D}, and frequency bands A, B, C, and D each appear three times in the frequency band sets {A, C}, {A, D}, {B, C}, {C, D}, {A, B}, {B, D}, the network device may consider that the terminal device supports dynamic Tx switching in a frequency band set {A, B, C, D}. In this way, the network device can configure a new carrier set for the terminal device. A frequency band set including a frequency band to which a carrier in the new carrier set belongs is or belongs to the frequency band set {A, B, C, D}, and the frequency band set including the frequency band to which the carrier in the new carrier set belongs does not belong to the frequency band set reported by the terminal device.

For another example, if the frequency band sets reported by the terminal device are {A, C}, {A, D}, {B, C}, {C, D}, {A, B}, and {B, D}, and the terminal device reports a maximum quantity of radio frequency chains supported by each carrier in each frequency band set shown in Table 8, the network device may consider that the terminal device supports dynamic Tx switching in the frequency band set {A, B, C, D}.

In this way, the network device can configure a new carrier set for the terminal device. A frequency band set including a frequency band to which a carrier in the new carrier set belongs is or belongs to the frequency band set {A, B, C, D}, and the frequency band set including the frequency band to which the carrier in the new carrier set belongs does not belong to the frequency band set reported by the terminal device.

**Table 8**

| Frequency band | A | B | C | D |
|---|---|---|---|---|
| Maximum quantity of radio frequency chains | 1 | 1 | 2 | 2 |

The terminal device reports, to the network device, a plurality of frequency band sets and/or maximum quantities of radio frequency chains supported by uplink carriers in overlapping frequency bands. In this application, the terminal device can be enabled to report a case in which a quantity of frequency bands in a set of dynamic Tx switching is greater than 2. According to the foregoing technical solution, when any two frequency band sets in the at least two frequency band sets reported by the terminal device include a same frequency band, the network device may consider that the terminal device supports dynamic Tx switching in a new frequency band set, so that the terminal device can be better scheduled. In addition, the network device can configure a carrier set including a plurality of frequency bands for the terminal device, and a frequency band set including a frequency band to which a carrier in the carrier set belongs does not belong to the original frequency band set reported by the terminal device.

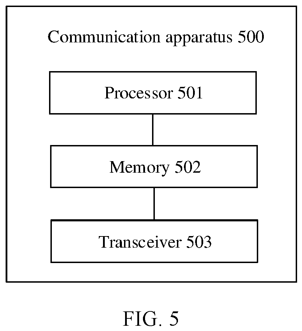

The following describes a communication apparatus provided in this application with reference to FIG. 4 and FIG. 5.

FIG. 4 is a schematic block diagram of a communication apparatus 400 according to this application. The communication apparatus may be a terminal device, or may be a component (for example, a chip or a circuit) that can be used in the terminal device. As shown in FIG. 4, the communication apparatus 400 may include a processing unit 401 and a transceiver unit 402.

The communication apparatus 400 may be configured to perform actions performed by the terminal device in the foregoing method embodiments. In this case, the communication apparatus 400 may be a terminal device or a component that may be configured in the terminal device. The transceiver unit 402 is configured to perform transceiver-related operations on a terminal device side in the foregoing method embodiments. The processing unit 401 is configured to perform processing-related operations on the terminal device side in the foregoing method embodiments.

As example description, for specific functions and beneficial effects of the processing unit 401 and the transceiver unit 402, refer to the content on the foregoing method side. Details are not described herein again.

The communication apparatus 400 may implement steps or procedures performed by the terminal device in the method 200 and the method 300 according to embodiments of this application. The communication apparatus 400 may include units configured to perform the methods performed by the terminal device in the method 200 in FIG. 2 and the method 300 in FIG. 3. In addition, the units in the communication apparatus 400 and the foregoing other operations and/or functions are respectively used to implement corresponding procedures in the method 200 in FIG. 2 and the method 300 in FIG. 3.

For example, when the communication apparatus 400 is configured to perform the method 200 in FIG. 2, the processing unit 401 may be configured to perform step 210 in the method 200, and the transceiver unit 402 may be configured to perform step 220 in the method 200.

For example, when the communication apparatus 400 is configured to perform the method 300 in FIG. 3, the processing unit 401 may be configured to perform step 310 in the method 300, and the transceiver unit 402 may be configured to perform step 320 in the method 300.

It should be understood that a specific process in which the units perform the foregoing corresponding steps is described in detail in the foregoing method embodiment. For brevity, details are not described herein again.

In a possible embodiment, a communication apparatus is further provided. The communication apparatus may be a terminal device, or may be a component (for example, a chip or a circuit) that can be used in the terminal device. The communication apparatus may include a transceiver and a processor, and optionally, may further include a memory. The transceiver may be configured to implement corresponding functions and operations corresponding to the sending unit and the processing unit, and the processor may be configured to implement corresponding functions and operations of the processing unit. The memory may be configured to store executable instructions or application program code, and the processor controls execution of the executable instructions or the application program code, to implement the communication method provided in the foregoing embodiments of this application; and/or the memory may be configured to temporarily store some data, instruction information, and the like. The memory may be independent of the processor. In this case, the memory may be connected to the processor through a communication line. In another possible design, the memory may alternatively be integrated with the processor. This is not limited in this embodiment of this application.

It should be understood that the communication apparatus in FIG. 4 may be a network device, or may be a component (for example, a chip or a circuit) that can be used in a network device. As shown in FIG. 4, the communication apparatus 400 may include a processing unit 401 and a transceiver unit 402.

The communication apparatus 400 may be configured to perform actions performed by the network device in the foregoing method embodiments. In this case, the communication apparatus 400 may be a network device or a component that may be configured in the network device. The transceiver unit 402 is configured to perform transceiver-related operations on a network device side in the foregoing method embodiments. The processing unit 401 is configured to perform processing-related operations on the network device side in the foregoing method embodiments.

As example description, for specific functions and beneficial effects of the processing unit 401 and the transceiver unit 402, refer to the content on the foregoing method side. Details are not described herein again.

The communication apparatus 400 may implement steps or procedures performed by the network device in the method 200 and the method 300 according to embodiments of this application. The communication apparatus 400 may include units configured to perform the methods performed by the network device in the method 200 in FIG. 2 and the method 300 in FIG. 3. In addition, the units in the communication apparatus 400 and the foregoing other operations and/or functions are respectively used to implement corresponding procedures in the method 200 in FIG. 2 and the method 300 in FIG. 3.

For example, when the communication apparatus 400 is configured to perform the method 200 in FIG. 2, the processing unit 401 may be configured to perform step 240 in the method 200, and the transceiver unit 402 may be configured to perform step 230 in the method 200.

For example, when the communication apparatus 400 is configured to perform the method 300 in FIG. 3, the processing unit 401 may be configured to perform step 340 in the method 300, and the transceiver unit 402 may be configured to perform step 330 in the method 300.

It should be understood that the processing unit 401 and the transceiver unit 402 are configured to perform actions of the network device on the foregoing method side. For specific content, refer to the content on the foregoing method side. Details are not described herein again.

In a possible embodiment, a communication apparatus is further provided. The communication apparatus may be a network device, or may be a component (for example, a chip or a circuit) that can be used in the network device. The communication apparatus may include a transceiver and a processor, and optionally, may further include a memory. The transceiver may be configured to implement corresponding functions and operations corresponding to the sending unit and the processing unit, and the processor may be configured to implement corresponding functions and operations of the processing unit. The memory may be configured to store executable instructions or application program code, and the processor controls execution of the executable instructions or the application program code, to implement the communication method provided in the foregoing embodiments of this application; and/or the memory may be configured to temporarily store some data, instruction information, and the like. The memory may be independent of the processor. In this case, the memory may be connected to the processor through a communication line. In another possible design, the memory may alternatively be integrated with the processor. This is not limited in this embodiment of this application.

FIG. 5 is a structural block diagram of a communication apparatus according to this application. The communication apparatus may be a terminal device. As shown in FIG. 5, the terminal device includes a processor 501, a radio frequency circuit, an antenna, and an input/output apparatus. The processor 501 may be configured to process a communication protocol and communication data, control the terminal device, execute a software program, process data of the software program, and the like. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that terminal devices of some types may not have an input/output apparatus.

Optionally, the terminal device may further include a memory 502, and the memory 502 is mainly configured to store a software program and data.

When data needs to be sent, the processor 501 performs baseband processing on the to-be-sent data, and then outputs a baseband signal to the radio frequency circuit. After performing radio frequency processing on the baseband signal, the radio frequency circuit sends a radio frequency signal in a form of an electromagnetic wave to the outside through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 5. An actual terminal device product may include one or more processors and one or more memories. The memory may also be referred to as a storage medium, a storage device, or the like. The memory may be deployed independent of the processor, or may be integrated with the processor. This is not limited in this embodiment of this application.

In this embodiment of this application, the antenna and the radio frequency circuit that have receiving and sending functions may be considered as a transceiver 503 of the terminal device, and the processor having a processing function may be considered as a processing unit of the terminal device. The transceiver may also be referred to as a transceiver unit, a transceiver, a transceiver apparatus, or the like. The processing unit may also be referred to as a processor, a processing board, a processing module, a processing apparatus, or the like. Optionally, a component that is configured to implement a receiving function in the transceiver 503 may be considered as a receiving unit, and a component that is configured to implement a sending function in the transceiver 503 may be considered as a sending unit. In other words, the transceiver 503 includes the receiving unit and the sending unit. The receiving unit sometimes may also be referred to as a receiver, a receiver machine, a receiver circuit, or the like. The sending unit sometimes may also be referred to as a transmitter, a transmitter machine, a transmitter circuit, or the like.

The processor 501, the memory 502, and the transceiver 503 communicate with each other through an internal connection path, to transfer a control signal and/or a data signal.

Optionally, in some embodiments, the memory 502 may store instructions used to perform the method performed by the terminal device in the method shown in FIG. 2 and the method shown in FIG. 3. The processor 501 may perform the instructions stored in the memory 502 and complete, in combination with other hardware (for example, the transceiver 503), steps performed by the terminal device in the method shown in FIG. 2 and the method shown in FIG. 3. For a specific working process and beneficial effects, refer to the descriptions in the embodiments shown in FIG. 2 and FIG. 3.

The methods disclosed in the foregoing embodiments of this application may be applied to the processor 501, or may be implemented by the processor 501. The processor 501 may be an integrated circuit chip and has a signal processing capability. In an implementation process, the steps in the foregoing methods can be implemented by using a hardware integrated logic circuit in the processor 501, or by using instructions in a form of software.

It should be understood that the communication apparatus shown in FIG. 5 may be a network device. As shown in FIG. 5, the network device includes a processor 501, a radio frequency circuit, an antenna, and an input/output apparatus. The processor 501 may be configured to process a communication protocol and communication data, control the network device, execute a software program, process data of the software program, and the like. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. It should be noted that network devices of some types may not have an input/output apparatus. Optionally, the network device may further include a memory 502, and the memory 502 is mainly configured to store a software program and data.

When data needs to be sent, the processor 501 performs baseband processing on the to-be-sent data, and then outputs a baseband signal to the radio frequency circuit. After performing radio frequency processing on the baseband signal, the radio frequency circuit sends a radio frequency signal in a form of an electromagnetic wave to the outside through the antenna. When data is sent to the network device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 5. An actual network device product may include one or more processors and one or more memories. The memory may also be referred to as a storage medium, a storage device, or the like. The memory may be deployed independent of the processor, or may be integrated with the processor. This is not limited in this embodiment of this application.

In this embodiment of this application, the antenna and the radio frequency circuit that have receiving and sending functions may be considered as a transceiver 503 of the network device, and the processor having a processing function may be considered as a processing unit of the network device. The transceiver may also be referred to as a transceiver unit, a transceiver, a transceiver apparatus, or the like. The processing unit may also be referred to as a processor, a processing board, a processing module, a processing apparatus, or the like. Optionally, a component that is configured to implement a receiving function in the transceiver 503 may be considered as a receiving unit, and a component that is configured to implement a sending function in the transceiver 503 may be considered as a sending unit. In other words, the transceiver 503 includes the receiving unit and the sending unit. The receiving unit sometimes may also be referred to as a receiver, a receiver machine, a receiver circuit, or the like. The sending unit sometimes may also be referred to as a transmitter, a transmitter machine, a transmitter circuit, or the like.

The processor 501, the memory 502, and the transceiver 503 communicate with each other through an internal connection path, to transfer a control signal and/or a data signal.

The methods disclosed in the foregoing embodiments of this application may be applied to the processor 501, or may be implemented by the processor 501. The processor 501 may be an integrated circuit chip and has a signal processing capability. In an implementation process, the steps in the foregoing methods can be implemented by using a hardware integrated logic circuit in the processor 501, or by using instructions in a form of software.

The foregoing processor in embodiments of this application may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps and logical block diagrams disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

Optionally, in some embodiments, the memory 502 may store instructions used to perform the method performed by the network device in the method shown in FIG. 2 and the method shown in FIG. 3. The processor 501 may perform the instructions stored in the memory 502 and complete, in combination with other hardware (for example, the transceiver 503), steps performed by the network device in the method shown in FIG. 2 and the method shown in FIG. 3. For a specific working process and beneficial effects, refer to the descriptions in the embodiments shown in FIG. 2 and FIG. 3.

An embodiment of this application further provides a chip. The chip includes a transceiver unit and a processing unit. The transceiver unit may be an input/output circuit or a communication interface. The processing unit is a processor, a microprocessor, or an integrated circuit that is integrated on the chip. The chip may perform the method on the terminal device side and the method on the network device side in the foregoing method embodiments.

An embodiment of this application further provides a computer-readable storage medium. The computer-readable storage medium stores instructions. When the instructions are executed, the method on the terminal device side and the method on the network device side in the foregoing method embodiments are performed.

An embodiment of this application further provides a computer program product including instructions. When the instructions are executed, the method on the terminal device side and the method on the network device side in the foregoing method embodiments are performed.

An embodiment of this application further provides a communication system, including a terminal device and a network device, which are respectively configured to perform the method on the terminal device side and the method on the network device side in the foregoing method embodiments.

In embodiments of this application, the terminal device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by a terminal device, or may be performed by a functional module that can invoke a program and execute the program in the terminal device.

It may be understood that, in this application, the network device may implement the functions in the foregoing embodiments by using one or more functional units (or referred to as functional modules), and the one or more functional units (or referred to as functional modules) may be located in a same apparatus or different apparatuses.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An information sending method, comprising:
determining, by a terminal device, first information, wherein the first information comprises a first information element and a second information element, the first information element indicates at least two frequency band sets, a first frequency band set in the at least two frequency band sets comprises at least one frequency band, the second information element indicates a first relationship between a second frequency band set and the first frequency band set in the at least two frequency band sets, and the first relationship comprises switching and/or concurrence; and
sending, by the terminal device, the first information to a network device.

2. The method according to claim 1, wherein all frequency bands in at least one frequency band set belong to a first frequency band combination, the first information further comprises a third information element, and the third information element indicates a quantity of radio frequency chains supported by the first frequency band combination.

3. The method according to claim 1, wherein
the first information comprises a fourth information element, and the fourth information element indicates a quantity of radio frequency chains supported by the first frequency band set.

4. The method according to any one of claims 1 to 3, wherein
a third frequency band set in the at least one frequency band set comprises a fifth information element, the fifth information element indicates a second relationship between frequency bands in the third frequency band set, and the second relationship comprises switching and/or concurrence.

5. The method according to any one of claims 1 to 3, wherein
the first information further comprises a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship comprises switching and/or concurrence.

6. The method according to any one of claims 1 to 5, wherein
the at least one frequency band set belongs to at least two frequency band set groups, and a first frequency band set group and a second frequency band set group in the at least two frequency band set groups cannot be switched.

7. The method according to claim 6, wherein
the first information further comprises a seventh information element, wherein the seventh information element indicates a quantity of radio frequency chains supported by a third frequency band set group in the at least two frequency band set groups.

8. An information receiving method, comprising:
receiving, by a network device, first information from a terminal device, wherein the first information comprises a first information element, the first information element indicates at least two frequency band sets, a first frequency band set in the at least two frequency band sets comprises at least one frequency band, and any two frequency band sets in the at least two frequency band sets comprise at least one same frequency band; and
configuring, by the network device, a first carrier set, wherein a frequency band set comprising a frequency band to which a carrier in the first carrier set belongs does not belong to the at least two frequency band sets.

9. The method according to claim 8, wherein
in the at least two frequency band sets, at least three frequency bands in at least three frequency band sets appear at least twice in the at least three frequency band sets, or all frequency bands in at least three frequency band sets appear at least twice in the at least three frequency band sets.

10. An information receiving method, comprising:
receiving, by a network device, first information from a terminal device, wherein the first information comprises a first information element and a second information element, the first information element indicates at least two frequency band sets, a first frequency band set in the at least two frequency band sets comprises at least one frequency band, the second information element indicates a first relationship between a second frequency band set and the first frequency band set in the at least two frequency band sets, and the first relationship comprises switching and/or concurrence; and
configuring, by the network device, M carrier sets, wherein carriers in the M carrier sets belong to at least one frequency band in the at least two frequency band sets, a second carrier set in the M carrier sets comprises at least one carrier, and a relationship between a third carrier set and the second carrier set in the M carrier sets is the first relationship; and
the second carrier set is a carrier set corresponding to the first frequency band set, the third carrier set is a carrier set corresponding to the second frequency band set, and M is a positive integer greater than or equal to 2.

11. The method according to claim 10, wherein all frequency bands in at least one frequency band set belong to a first frequency band combination, the first information further comprises a third information element, and the third information element indicates a quantity of radio frequency chains supported by the first frequency band combination.

12. The method according to claim 10, wherein
the first information comprises a fourth information element, and the fourth information element indicates a quantity of radio frequency chains supported by the first frequency band set.

13. The method according to any one of claims 10 to 12, wherein
a third frequency band set in the at least one frequency band set comprises a fifth information element, the fifth information element indicates a second relationship between frequency bands in the third frequency band set, and the second relationship comprises switching and/or concurrence.

14. The method according to any one of claims 10 to 12, wherein
the first information further comprises a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship comprises switching and/or concurrence.

15. The method according to any one of claims 10 to 14, wherein
the at least one frequency band set belongs to at least two frequency band set groups, and a first frequency band set group and a second frequency band set group in the at least two frequency band set groups cannot be switched.

16. The method according to claim 15, wherein
the first information further comprises a seventh information element, wherein the seventh information element indicates a quantity of radio frequency chains supported by a third frequency band set group in the at least two frequency band set groups.

17. The method according to any one of claims 10 to 16, wherein
at least one carrier comprised in the second carrier set corresponds to a same frequency band in the at least two frequency band sets; or
at least one carrier comprised in the second carrier set corresponds to different frequency bands in the at least two frequency band sets.

18. A communication apparatus, comprising:
a processing unit, configured to determine first information, wherein the first information comprises a first information element and a second information element, the first information element indicates at least two frequency band sets, a first frequency band set in the at least two frequency band sets comprises at least one frequency band, the second information element indicates a first relationship between a second frequency band set and the first frequency band set in the at least two frequency band sets, and the first relationship comprises switching and/or concurrence; and
a transceiver unit, configured to send the first information to a network device.

19. The apparatus according to claim 18, wherein all frequency bands in at least one frequency band set belong to a first frequency band combination, the first information further comprises a third information element, and the third information element indicates a quantity of radio frequency chains supported by the first frequency band combination.

20. The apparatus according to claim 18, wherein
the first information comprises a fourth information element, and the fourth information element indicates a quantity of radio frequency chains supported by the first frequency band set.

21. The apparatus according to any one of claims 18 to 20, wherein
a third frequency band set in the at least one frequency band set comprises a fifth information element, the fifth information element indicates a second relationship between frequency bands in the third frequency band set, and the second relationship comprises switching and/or concurrence.

22. The apparatus according to any one of claims 18 to 20, wherein
the first information further comprises a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship comprises switching and/or concurrence.

23. The apparatus according to any one of claims 18 to 22, wherein
the at least one frequency band set belongs to at least two frequency band set groups, and a first frequency band set group and a second frequency band set group in the at least two frequency band set groups cannot be switched.

24. The apparatus according to claim 23, wherein
the first information further comprises a seventh information element, wherein the seventh information element indicates a quantity of radio frequency chains supported by a third frequency band set group in the at least two frequency band set groups.

25. A communication apparatus, comprising:
a transceiver unit, configured to receive first information from a terminal device, wherein the first information comprises a first information element, the first information element indicates at least two frequency band sets, a first frequency band set in the at least two frequency band sets comprises at least one frequency band, and any two frequency band sets in the at least two frequency band sets comprise at least one same frequency band; and
a processing unit, configured to configure a first carrier set, wherein a frequency band set comprising a frequency band to which a carrier in the first carrier set belongs does not belong to the at least two frequency band sets.

26. The apparatus according to claim 25, wherein
in the at least two frequency band sets, at least three frequency bands in at least three frequency band sets each appear at least twice in the at least three frequency band sets, or all frequency bands in at least three frequency band sets each appear at least twice in the at least three frequency band sets.

27. A communication apparatus, comprising:
a transceiver unit, configured to receive first information from a terminal device, wherein the first information comprises a first information element and a second information element, the first information element indicates at least two frequency band sets, a first frequency band set in the at least two frequency band sets comprises at least one frequency band, the second information element indicates a first relationship between a second frequency band set and the first frequency band set in the at least two frequency band sets, and the first relationship comprises switching and/or concurrence; and
a processing unit, configured to configure M carrier sets, wherein carriers in the M carrier sets belong to at least one frequency band in the at least two frequency band sets, a second carrier set in the M carrier sets comprises at least one carrier, and a relationship between a third carrier set and the second carrier set in the M carrier sets is the first relationship; and
the second carrier set is a carrier set corresponding to the first frequency band set, the third carrier set is a carrier set corresponding to the second frequency band set, and M is a positive integer greater than or equal to 2.

28. The apparatus according to claim 27, wherein all frequency bands in at least one frequency band set belong to a first frequency band combination, the first information further comprises a third information element, and the third information element indicates a quantity of radio frequency chains supported by the first frequency band combination.

29. The apparatus according to claim 27, wherein
the first information comprises a fourth information element, and the fourth information element indicates a quantity of radio frequency chains supported by the first frequency band set.

30. The apparatus according to any one of claims 27 to 29, wherein
a third frequency band set in the at least one frequency band set comprises a fifth information element, the fifth information element indicates a second relationship between frequency bands in the third frequency band set, and the second relationship comprises switching and/or concurrence.

31. The apparatus according to any one of claims 27 to 30, wherein
the first information further comprises a sixth information element, the sixth information element indicates a third relationship between frequency bands in each frequency band set in at least one frequency band combination, a relationship between frequency bands in a fourth frequency band set in the at least one frequency band set complies with the third relationship, and the third relationship comprises switching and/or concurrence.

32. The apparatus according to any one of claims 27 to 31, wherein
the at least one frequency band set belongs to at least two frequency band set groups, and a first frequency band set group and a second frequency band set group in the at least two frequency band set groups cannot be switched.

33. The apparatus according to claim 32, wherein
the first information further comprises a seventh information element, wherein the seventh information element indicates a quantity of radio frequency chains supported by a third frequency band set group in the at least two frequency band set groups.

34. The apparatus according to any one of claims 27 to 33, wherein
at least one carrier comprised in the second carrier set corresponds to a same frequency band in the at least two frequency band sets; or
at least one carrier comprised in the second carrier set corresponds to different frequency bands in the at least two frequency band sets.

35. A communication apparatus, comprising a processor and a memory, wherein the processor is coupled to the memory, the memory is configured to store a computer program, and the processor is configured to execute the computer program stored in the memory, so that the communication apparatus performs the communication method according to any one of claims 1 to 7, or
the communication apparatus performs the communication method according to either of claims 8 and 9, or
the communication apparatus performs the communication method according to any one of claims 10 to 17.

36. A computer-readable storage medium storing instructions, wherein when the instructions are run on a computer,
the computer is enabled to perform the communication method according to any one of claims 1 to 7, or
the computer is enabled to perform the communication method according to either of claims 8 and 9, or
the computer is enabled to perform the communication method according to any one of claims 10 to 17.
